# EUROPEAN PATENT APPLICATION

(11) **EP 4 455 760 A1**
(43) Date of publication of application: **30.10.2024**
(21) Application number: 22911083.8
(22) Date of filing: 15.12.2022
(51) Int. Cl.: G02B 26/10, G01S 7/481, G02B 26/08

(54) **OPTICAL DEVICE**

(30) Priority: 21.12.2021 JP 2021206822
(71) Applicant: Pioneer Corporation, Tokyo 113-0021 (JP); Pioneer Smart Sensing Innovations Corporation, Tokyo 113-0021 (JP)
(72) Inventor: KASONO, Osamu, Kawagoe-shi, Saitama 350-8555 (JP)
(74) Representative: Vossius & Partner Patentanwälte Rechtsanwälte mbB
(86) International application number: PCT/JP2022/046230
(87) International publication number: WO 2023/120375

(57) **Abstract**

A rising time period UA is a predetermined first time period. As exemplified by a first non-irradiation time period NA1 or a second non-irradiation time period NA2, in a partial time period of the predetermined first time period, a movable reflection unit (120) is not irradiated with beams B and a vertical drive signal SA has a predetermined first slope. As exemplified by an irradiation time period MA, in a different partial time period of the predetermined first time period, the movable reflection unit (120) is irradiated with the beams B such that the vertical drive signal SA has a second slope different from the first slope.

## Description

### TECHNICAL FIELD

The present invention relates to an optical device.

### BACKGROUND ART

In recent years, various optical devices such as light detection and ranging (LiDAR) have been developed. For example, as described in Patent Document 1, the optical device includes a movable reflection unit which reflects beams emitted from a light-emitting element such as a laser diode (LD). A spot is generated by irradiating an object, which is a target for distance measurement of the optical device, with beams reflected by the movable reflection unit. The irradiation position of the beams can be displaced in the horizontal direction by swinging the movable reflection unit around a predetermined first rotation axis. In addition, the irradiation position of the beams can be shifted in the vertical direction by swinging the movable reflection unit around a second rotation axis orthogonal to the first rotation axis.

### RELATED DOCUMENT

### PATENT DOCUMENT

[Patent Document 1] Pamphlet of International Publication No. WO2020-004514

### SUMMARY OF THE INVENTION

### TECHNICAL PROBLEM

In optical devices such as LiDAR, it may be required to control a density of spots at a desired position to a desired density. For example, it may be required to adjust the density of spots in a portion of a visual field of an optical device to be higher than the density of spots in a periphery of the portion.

One example of problems of the problem to be solved by the present invention is to control the density of spots at a desired position to a desired density.

### SOLUTION TO PROBLEM

The invention as described in Claim 1 is:
an optical device including a signal generation unit which generates a drive signal for driving a movable reflection unit which reflects beams emitted from a light-emitting element in a predetermined direction, in which
a predetermined first time period in which the drive signal transitions from one of a maximum value and a minimum value of the drive signal to the other includes a time period in which the movable reflection unit is not irradiated with the beams and the drive signal has a predetermined first slope, and a time period in which the movable reflection unit is irradiated with the beams and the drive signal has a second slope different from the first slope.

### BRIEF DESCRIPTION OF THE DRAWINGS

Fig. 1 is a view showing an optical device according to Embodiment 1.
Fig. 2 is a graph showing a vertical drive signal according to Embodiment 1.
Fig. 3 is a graph showing a vertical drive signal according to Embodiment 2.
Fig. 4 is a graph showing a vertical drive signal according to Embodiment 3.
Fig. 5 is a graph showing a vertical drive signal according to Embodiment 4.

### DESCRIPTION OF EMBODIMENTS

Hereinafter, embodiments of the present invention will be described with reference to the drawings. In all drawings, the same constituent components are denoted by the same reference signs, and detailed explanation thereof will not be repeated.

### (Embodiment 1)

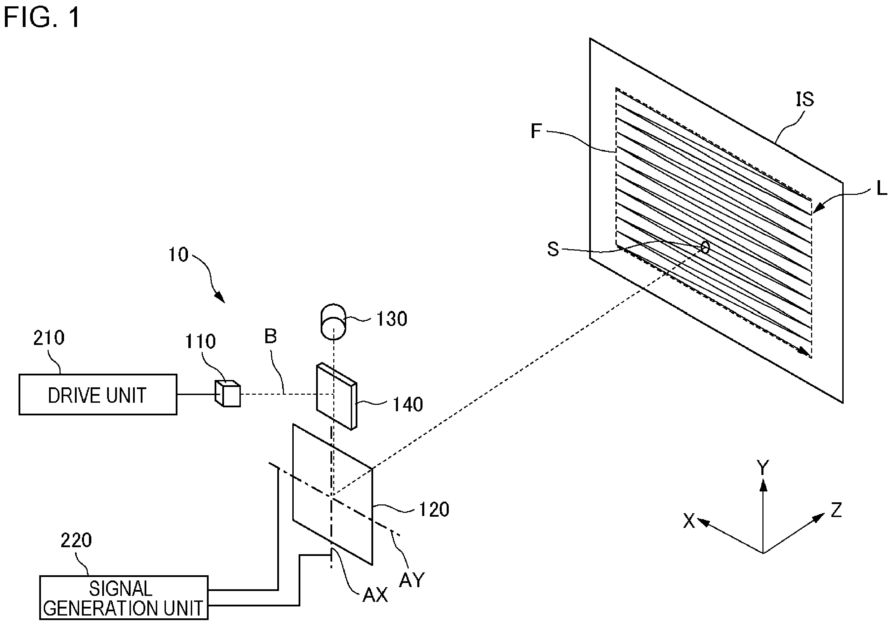

Fig. 1 is a view showing an optical device 10 according to Embodiment 1.

In Fig. 1, an arrow indicating a first direction X, a second direction Y, or a third direction Z indicates that a direction from a proximal end toward a distal end of the arrow is a positive direction in the direction indicated by the arrow, and the direction from the distal end toward the proximal end of the arrow is a negative direction in the direction indicated by the arrow.

The first direction X is parallel to the horizontal direction. The second direction Y is orthogonal to the first direction X. The second direction Y is a direction parallel to the vertical direction. Specifically, the positive direction in the second direction Y is a direction from the bottom to the top in the vertical direction, and the negative direction in the second direction Y is a direction from the top to the bottom in the vertical direction. The third direction Z is orthogonal to both the first direction X and the second direction Y. The third direction Z is a direction parallel to the horizontal direction. Specifically, the positive direction in the third direction Z is a direction from a side where a movable reflection unit 120 described later is positioned toward a side where a virtual surface IS described later is positioned, and the negative direction in the third direction Z is a direction from a side where the virtual surface IS is positioned toward a side where the movable reflection unit 120 is positioned.

Furthermore, the relationship among the first direction X, the second direction Y, the third direction Z, the horizontal direction, and the vertical direction is not limited to the above-described example. The above-described relationship changes depending on an arrangement of the optical device 10 with respect to the horizontal direction and the vertical direction. For example, the first direction X or the third direction Z may be parallel to the vertical direction.

The optical device 10 includes a light-emitting element 110, the movable reflection unit 120, a light-receiving element 130, a beam splitter 140, a drive unit 210, and a signal generation unit 220. The drive unit 210 and the signal generation unit 220 shown in Fig. 1 are shown in the functional block view. Therefore, the drive unit 210 and the signal generation unit 220 shown in Fig. 1 do not suggest the actual sizes or the actual positions of the drive unit 210 and the signal generation unit 220.

The light-emitting element 110 is, for example, a laser diode (LD). The light-emitting element 110 is driven by the drive unit 210. The drive unit 210 is, for example, a laser driver. In addition, the drive unit 210 is controlled by a control unit such as a microcomputer which is not shown in the drawing. The light-emitting element 110 emits beams B in a predetermined repetition period. As indicated by a dashed line extending from the light-emitting element 110 to the movable reflection unit 120 through the beam splitter 140, the beams B are emitted from the light-emitting element 110 and reflected by the beam splitter 140, and the movable reflection unit 120 is irradiated with the beams B.

In Embodiment 1, the movable reflection unit 120 is a twinaxis micro-electromechanical system (MEMS) mirror. The movable reflection unit 120 reflects the beams B toward the positive direction side in the third direction Z of the movable reflection unit 120. In the example shown in Fig. 1, a virtual surface IS is present on the positive direction side in the movable reflection unit 120 in the third direction Z. The virtual surface IS is virtually provided for describing the optical device 10 according to Embodiment 1. Therefore, the virtual surface IS does not need to be present in the actual optical device 10. The virtual surface IS is perpendicular to the third direction Z. In a case where the virtual surface IS is irradiated with the beams B as indicated by a dashed line extending from the movable reflection unit 120 to the virtual surface IS in Fig. 1, spots S are generated on the virtual surface IS.

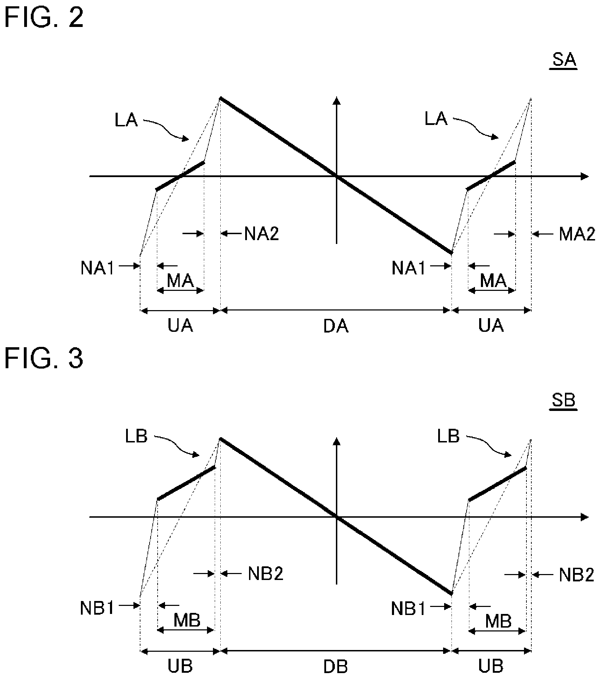

The signal generation unit 220 inputs a horizontal drive signal and a vertical drive signal SA, which will be described later with reference to Fig. 2, to the movable reflection unit 120. The signal generation unit 220 is, for example, a random signal generation unit. In one example, the movable reflection unit 120 is driven in the horizontal direction by the horizontal drive signal. Specifically, the movable reflection unit 120 swings around a predetermined first rotation axis AX at a resonance frequency of the movable reflection unit 120. In addition, the movable reflection unit 120 is driven in the vertical direction by the vertical drive signal SA. Specifically, the movable reflection unit 120 swings around the second rotation axis AY orthogonal to the first rotation axis AX at a frequency having a basic frequency that is lower than the resonance frequency of the movable reflection unit 120. It should be noted that the drive of the movable reflection unit 120 is not limited to this example.

In a case where the beams B are emitted from the light-emitting element 110 in a predetermined repetition period, a plurality of spots S are generated along the scanning line L by the swing of the movable reflection unit 120 around the first rotation axis AX and the swing of the movable reflection unit 120 around the second rotation axis AY. Thus, a distance measurement of the object in the visual field F can be performed. The visual field F shown in Fig. 1 indicates a visual field projected onto the virtual surface IS. The scanning line L is present in the visual field F projected onto the virtual surface IS.

After the beams B are reflected by the movable reflection unit 120, an object, which is not shown in the drawing, positioned on the positive direction side in the third direction Z of the movable reflection unit 120 is irradiated with the beams B. In a case where the beams B are reflected or scattered by the object, the movable reflection unit 120 is irradiated with the reflected light or scattered light of the beams B as the received light. As indicated by a dashed line extending from the movable reflection unit 120 to the light-receiving element 130 through the beam splitter 140, the received light is reflected by the movable reflection unit 120 and passes through the beam splitter 140, and the light-receiving element 130 is irradiated with the passing light. Thus, the light-receiving element 130 receives the received light. The light-receiving element 130 is, for example, an avalanche photodiode (APD). For example, the light-receiving element 130 is electrically connected to a light-receiving circuit which is not shown in the drawing. The light-receiving circuit generates a received signal by receiving the received light by the light-receiving element 130. The optical device 10 includes a computer such as a microcomputer, which is not shown in the drawing, electrically connected to the light-receiving circuit. The computer measures the time from emission of the beams B from the light-emitting element 110 to reception of the received light by the light-receiving element 130 to perform a distance measurement of the object irradiated with the beams B.

Fig. 2 is a graph showing a vertical drive signal SA according to Embodiment 1.

The horizontal axis of the graph shown in Fig. 2 indicates time. The arrow indicating the horizontal axis indicates that the time elapses from the left proximal end of the arrow to the arrowhead.

The vertical axis of the graph shown in Fig. 2 indicates a voltage value of the vertical drive signal SA. The arrow indicating the vertical axis indicates that a voltage value increases from the proximal end on the lower side of the arrow toward arrowhead on an upper side of the arrow. The voltage value of the vertical drive signal SA is 0 on the horizontal axis indicating time. Upon irradiation of the movable reflection unit 120 with the beams B in a case where the voltage value of the vertical drive signal SA is 0, spots S are generated substantially at the center of the visual field F in the second direction Y. As the voltage value of the vertical drive signal SA is increased, the generation position of the spots S upon irradiation of the movable reflection unit 120 with the beams B is shifted upward in the positive direction in the second direction Y of the visual field F. As the voltage value of the vertical drive signal SA is decreased, the generation position of the spots S upon irradiation of the movable reflection unit 120 with the beams B is shifted upward in the negative direction in the second direction Y of the visual field F.

The vertical drive signal SA changes periodically. Each period of the vertical drive signal SA includes a falling time period DA and a rising time period UA. The falling time period DA and the rising time period UA are alternately repeated. In the falling time period DA, the vertical drive signal SA transitions from a maximum value to a minimum value of the vertical drive signal SA. In the rising time period UA, the vertical drive signal SA transitions from a minimum value to a maximum value of the vertical drive signal SA.

The falling time period DA will be described.

Over the entire falling time period DA, the drive unit 210 causes the beams B to be emitted from the light-emitting element 110 in a predetermined repetition period. Therefore, a plurality of spots S are generated over the entire second direction Y of the visual field F along the scanning line L. Therefore, the falling time period DA is a main distance-measuring time period in which the distance measurement is performed in a wider range of the visual field F in the second direction Y than a distance measurement in a rising time period UA which will be described later.

The slope of the falling time period DA is substantially constant over the entire falling time period DA. Therefore, in the falling time period DA, the density of the spots S in the second direction Y is substantially constant over the entire second direction Y of the visual field F.

The rising time period UA will be described.

In the example shown in Fig. 2, a virtual line LA is attached to the rising time period UA for the sake of description. The virtual line LA is a line segment that connects a minimum value of the vertical drive signal SA at a start of the rising time period UA with a maximum value of the vertical drive signal SA at an end of the rising time period UA. The slope of the virtual line LA is substantially constant over the entire rising time period UA.

The rising time period UA includes a first non-irradiation time period NA1, an irradiation time period MA, and a second non-irradiation time period NA2. The first non-irradiation time period NA1, the irradiation time period MA, and the second non-irradiation time period NA2 are consecutive in this order.

In the first non-irradiation time period NA1 and the second non-irradiation time period NA2, the drive unit 210 stops the emission of the beams B from the movable reflection unit 120. Therefore, the spots S are not generated in the first non-irradiation time period NA1 and the second non-irradiation time period NA2. On the contrary, in the irradiation time period MA, the drive unit 210 causes the beams B to be emitted from the light-emitting element 110 in a predetermined repetition period. Therefore, a plurality of spots S are generated along the scanning line L in the irradiation time period MA. Therefore, the rising time period UA is a sub-distance-measuring time period in which the distance measurement is performed in a narrower range of the visual field F in the second direction Y than the distance measurement in the falling time period DA.

The irradiation time period MA according to Embodiment 1 is a time period in which the voltage value of the vertical drive signal SA is switched from negative to positive, and a time period in a periphery thereof. Thus, in the irradiation time period MA, the spots S are generated at the center of the visual field F in the second direction Y and in a periphery thereof in the second direction Y. Therefore, the density of the spots S at the center of the visual field F in the second direction Y and in a periphery thereof in the second direction Y can be increased, as compared with a case where the spots S are not generated in the irradiation time period MA.

In Embodiment 1, the slope of the vertical drive signal SA in the irradiation time period MA is different from the slope of the vertical drive signal SA in the first non-irradiation time period NA1 and the second non-irradiation time period NA2. Specifically, the absolute value of the slope of the vertical drive signal SA in the irradiation time period MA is smaller than the absolute value of the slope of the vertical drive signal SA in the first non-irradiation time period NA1 and the second non-irradiation time period NA2. Furthermore, with regard to the positive and negative signs of the slope of the vertical drive signal SA, the sign is positive in a case where the voltage value of the vertical drive signal SA is increased as the time elapses, and the sign is negative in a case where the voltage value of the vertical drive signal SA is decreased as the time elapses.

In Embodiment 1, the absolute value of the slope of the vertical drive signal SA in the irradiation time period MA is smaller than the absolute value of the slope of the virtual line LA. Therefore, the density of the spots S generated in the irradiation time period MA in the second direction Y can be increased, as compared with a case where the absolute value of the slope of the vertical drive signal SA in the irradiation time period MA is equal to or more than the absolute value of the slope of the virtual line LA.

In Embodiment 1, it is preferable that the absolute value of the slope of the vertical drive signal SA in the first non-irradiation time period NA1 and the second non-irradiation time period NA2 is as large as possible under the restrictions of the drive characteristics of the movable reflection unit 120. For example, the absolute value of the slope of the vertical drive signal SA in the first non-irradiation time period NA1 and the second non-irradiation time period NA2 may be set to the maximum absolute value allowed under restrictions of the drive characteristics of the movable reflection unit 120. In this case, the density of the spots S at a desired position with a slight decrease in frame rate can be increased, as compared with a case where the vertical drive signal SA transitions at the slope of the maximum absolute value over the entire range from the minimum value to the maximum value.

A waveform of the vertical drive signal SA is not limited to the waveform according to Embodiment 1.

For example, the absolute value of the slope of the vertical drive signal SA in the irradiation time period MA may be smaller than the absolute value of the slope of the vertical drive signal SA in the first non-irradiation time period NA1 and the second non-irradiation time period NA2.

In addition, the rising time period UA may include a time period in which the slope of the vertical drive signal SA is 0 or negative. For example, the slope of the vertical drive signal SA may be 0 or negative in at least a partial time period of at least one of the first non-irradiation time period NA1, the irradiation time period MA, and the second non-irradiation time period NA2. Thus, for example, positive and negative signs of the slope of the vertical drive signal SA in at least one of the first non-irradiation time period NA1, the irradiation time period MA, and the second non-irradiation time period NA2, and positive and negative signs of the slope of the vertical drive signal SA in the irradiation time period MA may be inverted to each other.

In addition, in Embodiment 1, the rising time period UA is a predetermined first time period. As exemplified by the first non-irradiation time period NA1 or the second non-irradiation time period NA2, in a partial time period of the predetermined first time period, the movable reflection unit 120 is not irradiated with the beams B and the vertical drive signal SA has a predetermined first slope. In addition, as exemplified by the irradiation time period MA, in a different partial time period of the predetermined first time period, the movable reflection unit 120 is irradiated with the beams B such that the vertical drive signal SA has a second slope different from the first slope. However, the falling time period DA may be a predetermined first time period. In this example, in a partial time period of the falling time period DA, the movable reflection unit 120 is not irradiated with the beams B and the vertical drive signal SA has a predetermined first slope. In addition, in another partial time period of the falling time period DA, the movable reflection unit 120 is irradiated with the beams B and the vertical drive signal SA has a second slope different from the first slope. In this example, the movable reflection unit 120 may be irradiated with the beams B emitted from the light-emitting element 110 in a predetermined repetition period over the entire rising time period UA.

In Embodiment 1, as exemplified by the vertical drive signal SA, the control of the waveform of the drive signal for driving the movable reflection unit 120 in the vertical direction has been described. However, the control of the waveform according to Embodiment 1 can be applied not only to the waveform of the drive signal for driving the movable reflection unit 120 in the vertical direction but also to the waveform of the drive signal for driving the movable reflection unit 120 in a predetermined direction different from the vertical direction. In this case, the control of the waveform according to Embodiment 1 can be applied to one or the both of a waveform of a drive signal for driving the movable reflection unit 120 in the vertical direction and a waveform of a drive signal for driving the movable reflection unit 120 in a direction different from the vertical direction.

In addition, the irradiation of the movable reflection unit 120 with the beams B in the rising time period UA is not limited to the aspect according to Embodiment 1. For example, the drive unit 210 may cause the beams B to be emitted from the light-emitting element 110 in a predetermined repetition time period during at least one of the first non-irradiation time period NA1 and the second non-irradiation time period NA2 as well as the irradiation time period MA. In addition, the irradiation of the movable reflection unit 120 with the beams B in the rising time period UA may be performed not only in a single time period of the irradiation time period MA but also in a plurality of segmented time periods.

### (Embodiment 2)

Fig. 3 is a graph showing a vertical drive signal SB according to Embodiment 2. The vertical drive signal SB according to Embodiment 2 is the same as the vertical drive signal SA according to Embodiment 1, except for the following points.

The vertical drive signal SB according to Embodiment 2 changes periodically in the same manner as in the vertical drive signal SA according to Embodiment 1. Each period of the vertical drive signal SB according to Embodiment 2 includes a falling time period DB and a rising time period UB. The rising time period UB according to Embodiment 2 includes a first non-irradiation time period NB1, an irradiation time period MB, and a second non-irradiation time period NB2. In addition, a virtual line LB is attached to the rising time period UB according to Embodiment 2 for the sake of description.

The irradiation time period MB according to Embodiment 2 is a time period in which the voltage value of the vertical drive signal SB is positive. Therefore, in Embodiment 2, the density of the spots S upwards in the positive direction in the second direction Y with respect to the center of the visual field F in the second direction Y can be increased, as compared with Embodiment 1. The irradiation time period MB may be a time period in which the voltage value of the vertical drive signal SB is negative. In this case, the density of the spots S downward in the negative direction in the second direction Y with respect to the center of the visual field F in the second direction Y can be increased, as compared with Embodiment 1.

From the description of Embodiments 1 and 2, the density of the spots S at a desired position of the visual field F in the second direction Y can be controlled to a desired density in accordance with the setting of the irradiation time period. Specifically, the generation position of the spots S in the rising time period can be controlled in accordance with the value of the vertical drive signal in the irradiation time period. For example, in a case where the irradiation time period includes a time period in which the voltage value of the vertical drive signal is switched from negative to positive, the spots S in the rising time period are generated at the center of the visual field F in the second direction Y, and in a periphery of the center. In addition, in a case where the voltage value of the vertical drive signal is positive over the entire irradiation time period, the spots S in the rising time period are generated upward in the positive direction in the second direction Y with respect to the center of the visual field F in the second direction Y. Further, in a case where the voltage value of the vertical drive signal is negative over the entire irradiation time period, the spots S in the rising time period are generated downward in the negative direction in the second direction Y with respect to the center of the visual field F in the second direction Y.

Next, the direct current component included in the vertical drive signal SB will be described.

The vertical drive signal SB in each period in Embodiment 2 includes a positive direct current component. The direct current component included in each period of the vertical drive signal SB is positive in a case where the integrated value of each period of the vertical drive signal SB is positive, and is negative in a case where the integrated value of each period of the vertical drive signal SB is negative. The positive or negative direct current normally flows through a circuit configuring the signal generation unit 220, which may cause heat generation or destruction of the circuit configuring the signal generation unit 220. Therefore, it is desirable to avoid the direct current component included in the vertical drive signal SB flowing normally.

In Embodiment 2, the vertical drive signal SB in a period different from the predetermined period shown in Fig. 3 may include a negative direct current component. For example, the waveform of the vertical drive signal SB in a period different from the predetermined period may be deformed from the waveform of the vertical drive signal SB in the predetermined period. Thus, the vertical drive signal SB in a period different from the predetermined period can include a negative direct current component. In addition, in this case, at least a portion of the positive direct current component in the predetermined period can be neutralized by the negative direct current component in a period different from the predetermined period. In this case, the absolute value of the positive direct current component in the predetermined period and the absolute value of the negative direct current component in a period different from the predetermined period may be equal to or different from each other. In addition, the positive direct current component in the predetermined period may be neutralized by the negative direct current component in one period different from the predetermined period, or may be neutralized by the negative direct current component in a plurality of periods different from the predetermined period.

### (Embodiment 3)

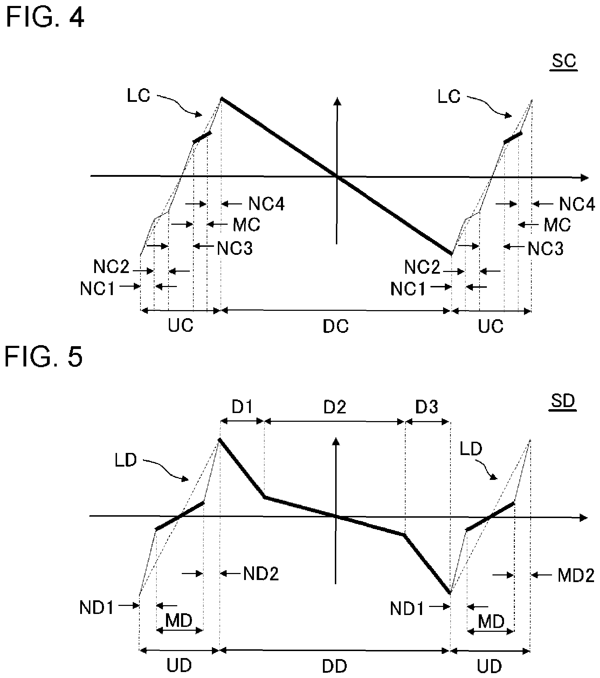

Fig. 4 is a graph showing a vertical drive signal SC according to Embodiment 3. The vertical drive signal SC according to Embodiment 3 is the same as the vertical drive signal SB according to Embodiment 2, except for the following points.

The vertical drive signal SC according to Embodiment 3 changes periodically in the same manner as in the vertical drive signal SB according to Embodiment 2. Each period of the vertical drive signal SC according to Embodiment 3 includes a falling time period DC and a rising time period UC. The rising time period UC according to Embodiment 3 includes a first non-irradiation time period NC1, a second non-irradiation time period NC2, a third non-irradiation time period NC3, an irradiation time period MC, and a fourth non-irradiation time period NC4. The first non-irradiation time period NC1, the second non-irradiation time period NC2, the third non-irradiation time period NC3, the irradiation time period MC, and the fourth non-irradiation time period NC4 are consecutive in this order. In addition, a virtual line LC is attached to the rising time period UC according to Embodiment 3 for the sake of description.

In the first non-irradiation time period NC1, the second non-irradiation time period NC2, the third non-irradiation time period NC3, and the fourth non-irradiation time period NC4, the drive unit 210 stops the emission of the beams B from the movable reflection unit 120. Therefore, the spots S are not generated in the first non-irradiation time period NC1, the second non-irradiation time period NC2, the third non-irradiation time period NC3, and the fourth non-irradiation time period NC4. On the contrary, in the irradiation time period MC, the drive unit 210 causes the beams B to be emitted from the light-emitting element 110 in a predetermined repetition period. Therefore, a plurality of spots S are generated along the scanning line L in the irradiation time period MC.

The irradiation time period MC according to Embodiment 3 is a time period in which the voltage value of the vertical drive signal SC is positive. Therefore, in Embodiment 3, the density of the spots S upwards in the positive direction in the second direction Y with respect to the center of the visual field F in the second direction Y can be increased, as compared with Embodiment 1.

In Embodiment 3, the vertical drive signal SC in the third non-irradiation time period NC3 has a predetermined first slope. In the third non-irradiation time period NC3, the voltage value of the vertical drive signal SC is switched from negative to positive. The vertical drive signal SC in the irradiation time period MC has a second slope different from the first slope. Specifically, the absolute value of the second slope is smaller than the absolute value of the first slope. The voltage value of the vertical drive signal SC in the irradiation time period MC is positive. The vertical drive signal SC in the second non-irradiation time period NC2 has a third slope different from the first slope. Specifically, the absolute value of the third slope is smaller than the absolute value of the first slope. The voltage value of the vertical drive signal SC in the second non-irradiation time period NC2 is negative. Therefore, the positive direct current component of the vertical drive signal SC can be reduced, as compared with a case where the vertical drive signal SC varies along a line segment that connects the start time period of the first non-irradiation time period NC1 and the start time period of the irradiation time period MC.

In addition, the irradiation of the movable reflection unit 120 with the beams B in the rising time period UC is not limited to the aspect according to Embodiment 3. For example, the drive unit 210 may cause the beams B to be emitted from the light-emitting element 110 in a predetermined repetition period in not only the irradiation time period MC but also a time period other than the irradiation time period MC of the rising time period UC, such as the second non-irradiation time period NC2 and the third non-irradiation time period NC3.

### (Embodiment 4)

Fig. 5 is a graph showing a vertical drive signal SD according to Embodiment 4. The vertical drive signal SD according to Embodiment 4 is the same as the vertical drive signal SA according to Embodiment 1, except for the following points.

The vertical drive signal SD according to Embodiment 4 changes periodically in the same manner as in the vertical drive signal SA according to Embodiment 1. Each period of the vertical drive signal SD according to Embodiment 4 includes a falling time period DD and a rising time period UD. The rising time period UD according to Embodiment 4 includes the first non-irradiation time period ND1, the irradiation time period MD, and the first non-irradiation time period ND2. In addition, a virtual line LD is attached to the rising time period UD according to Embodiment 4 for the sake of description.

The falling time period DD according to Embodiment 4 includes a first falling time period D1, a second falling time period D2, and a third falling time period D3. The first falling time period D1, the second falling time period D2, and the third falling time period D3 are consecutive in this order. In the first falling time period D1, the voltage value of the vertical drive signal SD is positive. In the second falling time period D2, the voltage value of the vertical drive signal SD is switched from positive to negative. In the third falling time period D3, the voltage value of the vertical drive signal SD is negative.

In Embodiment 4, the slope of the vertical drive signal SD in a partial time period of the falling time period DD is different from the slope of the vertical drive signal SD in a different partial time period of the rising time period UD. Specifically, the absolute value of the slope of the vertical drive signal SD in the second falling time period D2 is smaller than the absolute value of the slope of the vertical drive signal SD in the first falling time period D1 and the third falling time period D3. Therefore, the density of the spots S at the center of the visual field F in the second direction Y and a periphery thereof can be increased, as compared with a case where the slope of the vertical drive signal SD in the falling time period DD is constant over the entire falling time period DD.

The embodiments of the present invention have been described above with reference to the drawings, but these are exemplary of the present invention and various configurations other than an embodiment can also be adopted.

For example, in an embodiment, the beams B emitted from the light-emitting element 110 are pulse beams emitted in a predetermined repetition period. However, the beams B emitted from the light-emitting element 110 may be continuous light. Even in a case where the beams B are continuous light, the density of the spots S at a desired position can be controlled to a desired density by driving the movable reflection unit 120 in the same manner as in the embodiment.

This application claims priority based on Japanese Patent Application No. 2021-206822 filed on December 21, 2021, the disclosures of which are incorporated herein by reference in their entireties.

### REFERENCE SIGNS LIST

10 optical device
110 light-emitting element
120 movable reflection unit
130 light-receiving element
140 beam splitter
210 drive unit
220 signal generation unit
AX first rotation axis
AY second rotation axis
B beams
D1 first falling time period
D2 second falling time period
D3 third falling time period
DA falling time period
DB falling time period
DC falling time period
DD falling time period
F visual field
IS virtual surface
L scanning line
LA virtual line
LB virtual line
LC virtual line
LD virtual line
MA irradiation time period
MB irradiation time period
MC irradiation time period
MD irradiation time period
NA1 first non-irradiation time period
NA2 second non-irradiation time period
NB1 first non-irradiation time period
NB2 second non-irradiation time period
NC1 first non-irradiation time period
NC2 second non-irradiation time period
NC3 third non-irradiation time period
NC4 fourth non-irradiation time period
ND1 first non-irradiation time period
ND2 first non-irradiation time period
S spot
SA vertical drive signal
SB vertical drive signal
SC vertical drive signal
SD vertical drive signal
UA rising time period
UB rising time period
UC rising time period
UD rising time period
X first direction
Y second direction
Z third direction

## Claims

1. An optical device comprising:
a signal generation unit which generates a drive signal for driving a movable reflection unit which reflects beams emitted from a light-emitting element in a predetermined direction,
wherein a predetermined first time period in which the drive signal transitions from one of a maximum value and a minimum value of the drive signal to the other includes a time period in which the movable reflection unit is not irradiated with beams and the drive signal has a predetermined first slope, and a time period in which the movable reflection unit is irradiated with the beams and the drive signal has a second slope different from the first slope.

2. The optical device according to Claim 1,
wherein an absolute value of the second slope is smaller than an absolute value of the first slope.

3. The optical device according to Claim 1 or 2,
wherein positive and negative signs of the second slope, and positive and negative signs of the first slope are inverted to each other.

4. The optical device according to any one of Claims 1 to 3,
wherein the first time period further includes a time period in which the drive signal has a third slope different from the first slope, and
the drive signal in the time period in which the drive signal has the second slope is one of positive and negative, and the drive signal in the time period in which the drive signal has a third slope is the other of positive and negative.

5. The optical device according to any one of Claims 1 to 4,
wherein the first time period and a second time period in which the drive signal transitions from the other of the maximum value and the minimum value of the drive signal to the one are alternately repeated.

6. The optical device according to Claim 5,
wherein an slope of the drive signal in the second time period is substantially constant over an entire second time period.

7. The optical device according to Claim 5,
wherein an slope of the drive signal in a partial time period of the second time period is different from an slope of the drive signal in a different partial time period of the second time period.

8. The optical device according to any one of Claims 1 to 7,
wherein the drive signal in a predetermined period includes a positive direct current component, and the drive signal in a period different from the predetermined period includes a negative direct current component.

9. The optical device according to any one of Claims 1 to 8, further comprising:
a light-receiving element that receives reflected light or scattered light of the beams reflected by the movable reflection unit.
